# EUROPEAN PATENT APPLICATION

(11) **EP 4 717 902 A1**
(43) Date of publication of application: **01.04.2026**
(21) Application number: 24203676.2
(22) Date of filing: 30.09.2024
(51) Int. Cl.: F02K 1/72, F02K 1/76

(54) **TERTIARY LOCK SYSTEM WITH LOCKING VERIFICATION SYSTEM**

(71) Applicant: Rohr, Inc., Chula Vista, CA 91910-2098 (US)
(72) Inventor: WHARTON, Brett, Prestwick, South Ayrshire, KA9 2SA (GB); SLOANE, Nicholas, Prestwick, South Ayrshire, KA9 2SA (GB); HAWKSWORTH, Andrew, Prestwick, South Ayrshire, KA9 2SA (GB)
(74) Representative: Dehns

(57) **Abstract**

A tertiary lock system (20) for an aircraft thrust reverser, comprising: a lock member (22) actuatable between a locked position, in which a loadpath of the lock member (22) engages a movable component (10) to prevent deployment of the thrust reverser, and an unlocked position, in which the lock member (22) permits deployment of the movable component (10) of the thrust reverser; wherein the lock member comprises an element (30) arranged such that at least a portion of the element extends into or through the loadpath of the lock member; and a locking verification system (50) including a sensor module (52) arranged for interrogating the element when the lock member is in the locked position; wherein the locking verification system is configured to: confirm that the tertiary lock system has been commanded to actuate the lock member into the locked position; instruct the sensor module to interrogate the element; and verify that the lock member is in the locked position and the loadpath is uncompromised in response to determining that the element is intact.

## Description

### FIELD

The present invention relates generally to tertiary lock systems for thrust reverser components used in an aircraft (e.g., translating thrust reverser cowls) and in particular to a system and method for verifying a locking status or condition of a tertiary lock system.

### BACKGROUND

Thrust reversers are provided on jet engines typically to increase the amount of braking on an aircraft upon landing. When deployed, a thrust reverser will change the direction of thrust of the jet engine such that some or all of the thrust is directed forwards, which acts to slow the aircraft so that it can then taxi off the runway.

There are a number of types of thrust reverser, all of which must be stowed during normal aircraft operation, for example so that the thrust reverser cannot be deployed during take-off or at a cruise altitude and can only be deployed during landing. In order to ensure this, one or more lock members are provided to prevent unwanted deployment of the thrust reverser, and in particular the actuators that move the various parts of the thrust reverser assembly.

Most thrust reverser systems include primary, secondary and tertiary locks. Although this may depend on the particular configuration, the primary locks are typically coupled to the actuators of the thrust reverser, the secondary locks may be coupled to the power drive unit of the actuators and the tertiary locks may be coupled directly to a thrust reverser component (e.g., a translating cowl).

It is desired to provide a system that is able to directly and accurately determine or verify the locking status (e.g. locking capability) of a lock member of a tertiary lock system in order to minimise the latency of identification of any failures.

### SUMMARY

According to a first aspect, there is provided a tertiary lock system for an aircraft thrust reverser, comprising: a lock member actuatable between a locked position, in which a loadpath of the lock member engages a movable component to prevent deployment of the thrust reverser, and an unlocked position, in which the lock member permits deployment of the movable component of the thrust reverser; wherein the lock member comprises an element arranged such that at least a portion of the element extends into or through the loadpath of the lock member; and a locking verification system including a sensor module arranged for interrogating the element when the lock member is in the locked position; wherein the locking verification system is configured to: confirm that the tertiary lock system has been commanded to actuate the lock member into the locked position; instruct the sensor module to interrogate the element; and verify that the lock member is in the locked position and the loadpath is uncompromised in response to determining that the element is intact.

Thus, the present invention provides the ability to (i) verify that a lock member of a tertiary lock system has (successfully) been actuated into a locked position and to (ii) verify that the loadpath (e.g. the part of the lock member configured to engage/block a movable component) of the lock member is present and uncompromised based on the determination that an element (within the loadpath) is intact.

This two-step verification confirms that the lock member is in a condition to/able to prevent deployment of the thrust reverser (e.g. even in the event that the actuators of the movable component are inadvertently activated).

Accordingly, the present invention can protect against (e.g. identify) the loss of lock loadpath and degraded capability of the lock loadpath due to partial loss, as well as protect against (e.g. prevent) further degraded capability and eventual full loss of lock loadpath.

The locking verification system is configured to: raise an alert that the lock member is in the unlocked position and/or the loadpath is compromised in response to determining that the element is not intact.

The locking verification system may be configured to: send a query to a (central) aircraft control system, or to a control system of the thrust reverser assembly, e.g. a control system of a primary or secondary lock system, or a control system of the tertiary lock system, in order to confirm that the tertiary lock system has been commanded to actuate the lock member into the locked position. Alternatively, the locking verification system may directly query an actuator and/or a sensor of the lock member.

The element may be an electrical wire or transmission line. The sensor module may be configured to interrogate the element by transmitting and receiving an electrical signal to and from the element. The element may comprise an interface portion including, for example, electrical contact pads arranged so that the element forms a closed circuit with the sensor module when the lock member is in the locked position.

The element may be an electromagnetic waveguide, and the sensor module may be configured to interrogate the element by transmitting and receiving an electromagnetic signal to and from the element. For example, the element may be an optical fiber and the sensor module may comprise an optical sensor.

The element may be magnetic or comprise magnetic material, and the sensor module may comprise a magnetic sensor (e.g. a Hall effect sensor) configured to interrogate a magnetic field of the element.

The sensor module may comprise a (piezoelectric) transducer configured to interrogate an acoustic response of the element by transmitting and receiving an acoustic signal into and from the element.

For example, the element may have a particular configuration/shape that generates a known acoustic response to a certain frequency. The acoustic response of the element can be monitored by the sensor module and if the acoustic response changes then the sensor module can determine that the element is not intact (e.g. it has been damaged or otherwise compromised).

The lock member may be a blade style lock member.

The lock member may be a hook style lock member.

The lock member may be translatable or rotatable between the locked position and the unlocked position.

According to a second aspect, there is provided a thrust reverser assembly comprising a tertiary lock system according to the first aspect.

The thrust reverser assembly may comprise: a movable component; and one or more actuators configured to selectively move the movable component between a stowed position and a deployed position; wherein the tertiary lock system is configured to selectively prevent movement of the movable component from its stowed position to its deployed position via selective movement of the lock member between its locked position and its unlocked position.

In its locked position, the lock member may prevent movement of the movable component from its stowed position to its deployed position.

In its unlocked position, the lock member may allow movement of the movable component from its stowed position to its deployed position.

According to a third aspect, there is provided a method of verifying a condition of a lock member of a tertiary lock system for an aircraft thrust reverser, wherein the lock member is actuatable between a locked position, in which a loadpath of the lock member engages a movable component to prevent deployment of the thrust reverser, and an unlocked position, in which the lock member permits deployment of the movable component of the thrust reverser, wherein the lock member comprises an element arranged such that at least a portion of the element extends into or through the loadpath of the lock member; and a locking verification system including a sensor module arranged for interrogating the element when the lock member is in the locked position; the method comprising: confirming that the tertiary lock system has been commanded to actuate the lock member into the locked position; instructing the sensor module to interrogate the element; and verifying that the lock member is in the locked position and the loadpath is uncompromised in response to determining that the element is intact.

Thus, the present invention provides a method of verifying a condition/status of a lock member of a tertiary lock system by (i) verifying that the lock member has (successfully) been actuated into the lock position, and (ii) verifying that (the guide within the) loadpath of the lock member is uncompromised/intact.

The method may comprise: raising an alert that the lock member is in the unlocked position and/or the loadpath is compromised in response to determining that the element is not intact.

The method step of confirming that the tertiary lock system has been commanded to actuate the lock member into the locked position may comprise: sending a query to a (central) aircraft control system, or to a control system of the thrust reverser assembly, e.g. a control system of a primary or secondary lock system, or a control system of the tertiary lock system, in order to confirm that the tertiary lock system has been commanded to actuate the lock member into the locked position. Alternatively, the step may comprise directly querying an actuator and/or a sensor associated with the lock member.

The element may be an electrical wire or transmission line. The sensor module may be configured to interrogate the element by transmitting and receiving an electrical signal to and from the element. The element may comprise an interface portion including, for example, electrical contact pads arranged so that the element forms a closed circuit with the sensor module when the lock member is in the locked position.

The element may be an electromagnetic waveguide, and the sensor module may be configured to interrogate the element by transmitting and receiving an electromagnetic signal to and from the element. For example, the element may be an optical fiber and the sensor module may comprise an optical sensor.

The element may be magnetic or comprise magnetic material, and the sensor module may comprise a magnetic sensor (e.g. a Hall effect sensor) configured to interrogate a magnetic field of the element.

The sensor module may comprise a (piezoelectric) transducer configured to interrogate an acoustic response of the element. For example, the element may have a particular configuration/shape that generates a known acoustic response to a certain frequency. The acoustic response of the element can be monitored by the sensor module and if the acoustic response changes then the sensor module can determine that the element is not intact (e.g. it has been damaged or otherwise compromised).

The method may comprise a step of providing a lock member with an element arranged such that, when the lock member is in the locked position, at least a portion of the element extends into or through the loadpath of the lock member.

The method may comprise arranging the element such that an interface portion of the element is positioned in a non-loadpath portion of the lock member (e.g. in a portion of the lock member that does not engage or block the movable component). The interface portion may be arranged so that it can be interrogated (e.g. monitored) by the sensor module when the lock member is in the locked position.

For example, the method may comprise embedding an element in a lock member, wherein the interface portion is provided on an external surface of the lock member.

### BRIEF DESCRIPTION OF THE DRAWINGS

Various embodiments will now be described, by way of example only, and with reference to the accompanying drawings in which:
Fig. 1 shows a thrust reverser assembly;
Fig. 2a shows a tertiary lock system and a tertiary lock monitoring system, wherein the tertiary lock is in a locked position;
Fig. 2b shows the tertiary lock system of Fig. 2a, wherein the tertiary lock is in an unlocked position; and
Fig. 2c shows the tertiary lock system of Fig. 2a, wherein the tertiary lock is in the locked position but the lock loadpath is not intact.

### DETAILED DESCRIPTION

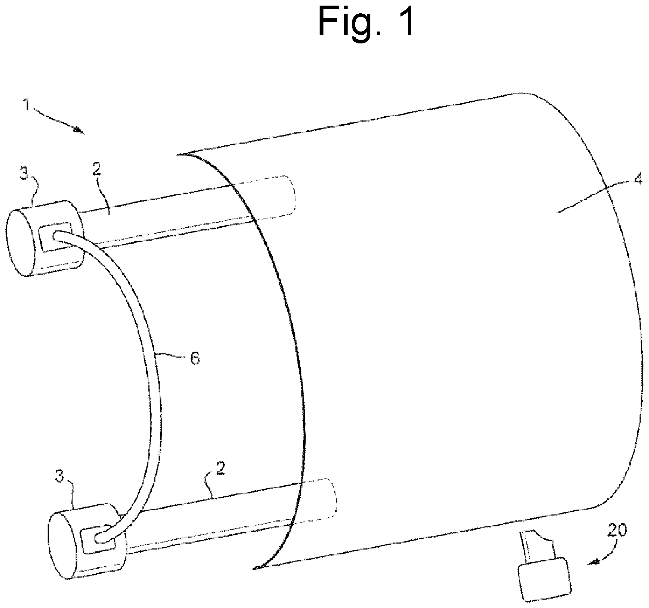

Fig. 1 shows a thrust reverser assembly 1 of an engine (e.g., a jet engine) that comprises a thrust reverser actuation system ("TRAS") in the form of a plurality of actuators 2 that are configured to extend and retract a translating cowl 4. Although a single nacelle cowl is shown, typically two are provided per engine, and any number may be provided to suit a particular application. Similarly, the number of actuators may vary and the arrangement shown in Fig. 1 should be treated as representative of an example only.

One or more primary locks (not shown) may be included in the thrust reverser actuation system, and are typically located within the housing of the actuators 2. The primary locks may be configured to engage the components of the actuator 2 with which they are configured.

The thrust reverser assembly 1 may further comprise part of the nacelle structure of the engine, in this case the translating cowl 4. The thrust reverser assembly 1 may form part of a cascade -type thrust reverser, for example used on a high bypass ratio jet engine. In such an arrangement, the translating cowl 4 may be located on the external surface of the nacelle of the engine. When deployed (i.e., translated from a stowed position to a deployed position), the translating cowl 4 exposes a plurality of cascade vanes, which redirect airflow through the jet engine such that the direction of jet thrust is at least partially reversed.

A power drive unit 3 may be associated with each actuator 2, and may be configured to supply a drive force (e.g., a rotational drive force) to the actuator 2. The actuator 2 may be configured to receive the rotational drive force and, in response thereto, selectively move the translating cowl 4 between its stowed position and deployed position. The power drive units 3 may be operatively connected by a synchronisation mechanism 6, such that the actuators 2 may be driven at substantially the same time.

The present invention relates generally to tertiary lock systems, which are configured to engage the moving parts of the nacelle structure of the engine. This is distinct from the primary and secondary lock systems, which typically engage the components of the actuators or power drive unit of the actuators, respectively.

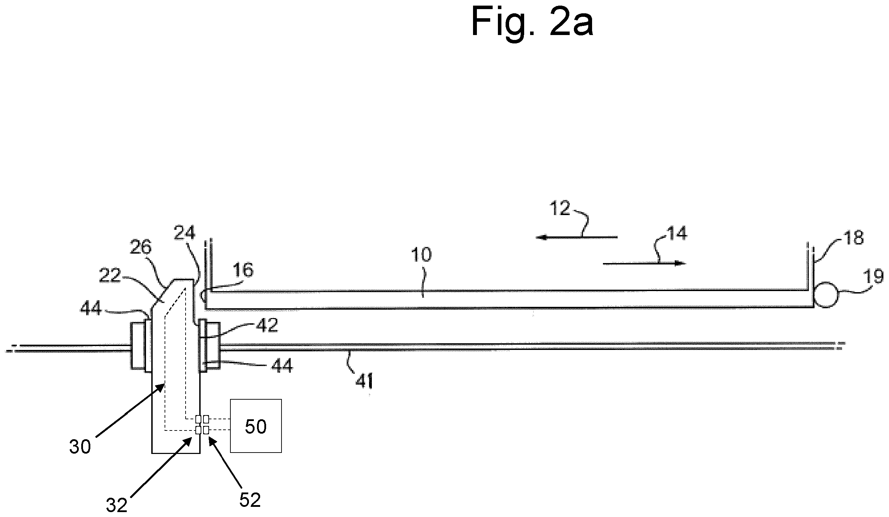

A tertiary lock system 20 is shown schematically in Fig. 1 as engaging the translating cowl 4. It should be noted that the tertiary lock system 20 does not engage any component of the actuators 2. The tertiary lock system 20 may be fixed to the non-moving part of the nacelle structure, for example secured or mounted to a beam along which the translating cowl 4 moves (e.g., housing 41 as shown in Fig. 2a).

Fig. 2a shows a tertiary lock system 20 for engaging a thrust reverser component 10, which may be a translatable component that is configured to deploy a thrust reversing system. For example, the component 10 may expose, e.g., cascade vanes, causing some of the air flowing through the engine to be redirected in a forward direction to create a reverse thrust, which slows the aircraft to which the engine is attached upon landing. The component 10 may be operatively connected to the translating cowl 4 of the thrust reverser assembly 1 shown in Fig. 1.

The component 10 may be translatable in a first direction, as depicted by arrow 12, in order to deploy the thrust reverser. The component 10 may be translatable in a second opposite direction, as depicted by arrow 14, in order to stow the thrust reverser. A number of locking systems may be provided in order to prevent unwanted deployment of the thrust reverser. One such locking system 20 is shown in Fig. 2a and is configured to prevent movement of the component 10 in the first direction 12.

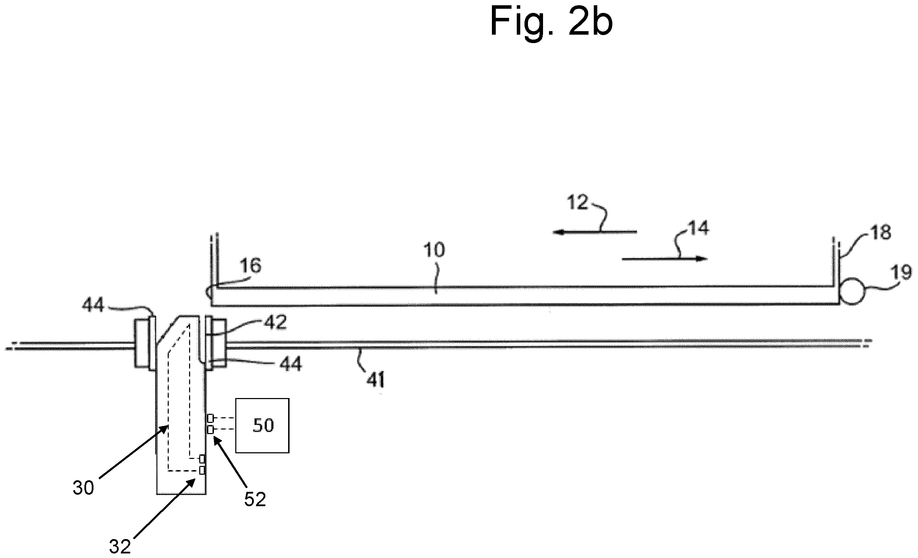

The lock system 20 comprises a lock member 22 that is actuatable between a locked position, as shown in Fig. 2a, and an unlocked position, as shown in Fig. 2b. As shown, the lock member 22 may translate in a direction perpendicular to the first and/or second directions 12, 14. In the locked position, the lock member 22 prevents deployment of the thrust reverser assembly 1 by establishing/providing a loadpath that engages (e.g. blocks the path of) the movable component 10, and in the unlocked position, the lock member permits deployment of the thrust reverser assembly 1 (e.g. by moving the loadpath out of the path of the movable component 10).

Thus, the loadpath of the lock member 22 is the part/portion of the lock member 22 configured to engage the movable component 10 and thus prevent its movement (e.g. via blocking or restraining).

For example, as shown, the lock member 22 comprises a surface 24 configured to abut the component 10 and prevent its movement in the first direction 12 (i.e., to prevent deployment of the thrust reverser assembly 1) when the lock member 22 is in the locked position. The surface 24 may be configured to abut a corresponding surface 16 on the component 10, and may be substantially perpendicular to the direction of travel (i.e., arrows 12 and 14) of the component 10.

It will be appreciated that the component 10 may be semi-cylindrical, and the corresponding surface 16 may be a semi-annular surface extending around its perimeter. Furthermore, a plurality of lock systems may be provided, each having the same configuration as the lock member 22 of lock system 20, such that a plurality of lock members engage the semi- annular surface at regularly spaced intervals around the perimeter of the component 10.

The lock member 22 may be movable within a passage 42 of housing 41, which housing 41 may be fixed, e.g., mounted on a beam within the engine case. One or more bearings 44 (e.g., sliding bearings) may be provided to allow the lock member 22 to move freely within the passage 42.

In the illustrated embodiment, the lock member 22 is a blade style lock member. However, it is envisaged that hook style lock members (and hook style tertiary lock systems) also fall within the scope of the present invention.

Similarly, it is considered that regarding the actuating mechanism for the lock member 22, various arrangements are known in the art and would be suitable for use with the present invention. The lock member 22 may be translatable or rotatable between the locked position and the unlocked position.

In the illustrated embodiment, the tertiary lock system 20 comprises a locking verification system (e.g. lock monitoring system) 50 configured to determine a condition, or status, of the lock member 22.

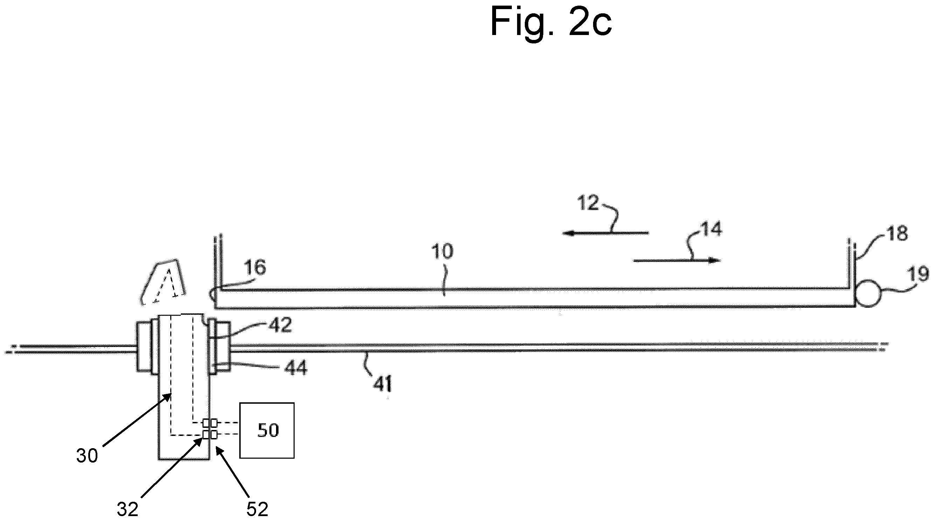

Specifically, the locking verification system 50 is configured to determine if the lock member 22 is in the locked position and the loadpath is intact/uncompromised (Fig. 2a), or if the lock member is in the unlocked position (Fig. 2b), or if the lock member 22 is in the locked position but the lock loadpath has been compromised, e.g. it has been partially or fully damaged (Fig. 2c).

The locking verification system 50 comprises a sensor module 52 and a processor (not shown) for controlling the operation of the sensor module 52 and for communicating with other external control systems (e.g. for communicating with a central aircraft control system and/or with one or more of control systems of the thrust reverser assembly, primary lock system, secondary lock system, and tertiary lock system).

The sensor module 52 is arranged for interrogating an element 30 (which is arranged within the lock member 22, as explained in more detail below) when the lock member 22 is in the locked position. In other words, the sensor module 52 is positioned so that, when the lock member 22 is in the locked position, the sensor module 52 can interrogate, e.g. monitor and/or communicate with, the element 30.

The present invention envisages this interrogation being done in a manner of different ways. For instance, the interrogation of the element 30 may comprise determining, e.g. monitoring, a value of a property/characteristic of element 30. The measured property of element 30 can then be analysed by sensor module 52/locking verification system 50 to determine a condition of the element 30 (e.g. intact). The sensor module 52 may be configured to transmit and receive a signal to and from the element 30 in order to interrogate the element 30.

The sensor module 52 may be capable of performing an interrogation operation only when the lock member 22 is in the locked position, or may always be capable of performing an interrogation operation (with a negative result being either due to the lock member 22 being the unlocked position and/or due to the element 30 being damaged). For example, in the illustrated embodiment the signal is an electrical signal and the sensor module 52 will only be capable of transmitting a signal when it forms a closed electrical circuit with the element 30 (explained in more detail below). Alternatively, the signal may be an optical (electromagnetic) signal, and the sensor module 52 will always be capable of transmitting a signal, even if not to its intended target (and it does not receive a transmitted signal back).

The element 30 is arranged such that at least a portion/section of the element 30 extends into or through the loadpath of the lock member 22. In other words, when the lock member 22 is in the locked position, at least a section/portion of the element 30 lies in the portion of the lock member 22 that engages (e.g., blocks the path of) the movable component 10. For example, as shown in the illustrated embodiment, the element 30 is arranged to extend along a majority of the length of the lock member 22, in order to extend into and through the loadpath of the lock member 22 such that the element 30 lies in the path of the movable component 10.

As shown in the illustrated embodiment, where the lock member 22 is a blade type lock member, the element 30 may be arranged to extend into or through a tip of the lock member 22, or a part of the lock member 22 proximate to the surface 24 of the lock member 22 (the surface 24 being configured to abut/engage (a corresponding surface 16 of) the movable component 10).

In another example/embodiment, where the lock member 22 is a hook type lock member, the element 30 may be arranged to extend into or through the hook body, hook point or hook tip of the hook type lock member, depending on which part of the lock member is arranged to engage the movable component 10.

The shape of element 30 may conform to/follow the profile shape of the (loadpath of the) lock member 22 to ensure that the integrity of the lock member 22 is detectable via the monitoring of the integrity/continuity of the element 30 within.

The element 30 may be embedded within, and/or form part of, the lock member 22. The lock member 22 may be cast round the element 30, or the element 30 may be embedded into a hole bored through lock member 22. In an embodiment (e.g. where the sensor module 52 comprises a piezoelectric transducer configured to interrogate an acoustic response of the element 30), the element 30 may be a hole or tube bored into the lock member 22. The lock member 22 and/or element 30 arrangement may be constructed via additive manufacture.

The element 30 comprises an interface portion 32 (e.g. a terminal, end portion of the element 30) which may be positioned in the non-active part (non-loadpath part) of the lock member 22 - that is, the part of the lock member 22 that does not engage (e.g. does not block the path of) the movable component 10 when the lock member 22 is in the locked position.

The interface portion 32 of the element 30 and the sensor module 52 may be arranged (e.g. correspondingly positioned) such that, when the lock member 22 is in the locked position, the sensor module 52 is able to interact with (e.g. interrogate) the interface portion 32.

For instance, a signal transmitted by the sensor module 52 will be received by the interface portion 32 (and a signal transmitted by the interface portion 32 will be received by the sensor module 52) when the lock member 22 is in the locked position.

In the illustrated embodiment, the element 30 is an electrical conductor, e.g. it is a wire. The interface portion 32 comprises two electrical connectors (e.g. brush or contact pads) and the sensor module 52 comprises two corresponding electrical connectors (e.g. brush or contact pads). Thus, when the lock member 22 is in the locked position, the sensor module 52, the interface portion 32 and the wire 30 form a closed loop circuit through which an electrical signal/pulse can travel.

In Figs. 2a-2c, the electrical connectors 32a, 32b are shown as being displaced from one another in an axial direction of the lock member 22. However, the electrical connectors 32a, 32b may be positioned side by side (displaced from each other) in a direction perpendicular to the plane of Figs. 2a-2c (e.g. positioned around the radius of component 10).

In a related embodiment, the element 30 is an electrical guide (e.g. a transmission line) and the interface portion 32 comprises a wireless power receiver/transmitter and the sensor module 52 comprises a wireless power transmitter/receiver. Accordingly, when the lock member 22 is in the locked position, the sensor module 52 is configured to transmit a wireless power signal to the interface portion 32 and configured to receive a wireless power signal back from the interface portion 32.

In another embodiment, the element 30 may be a waveguide, e.g. an acoustic or electromagnetic waveguide, arranged to convey an acoustic or electromagnetic signal. For example, the element 30 may be an optical fibre. Accordingly, the sensor module 52 will be configured to transmit an acoustic signal (e.g. by a piezoelectric transducer) or an electromagnetic signal (e.g. by an optical sensor), and the interface portion 32 will be configured to receive the acoustic or electromagnetic signal and feed it into or through the element 30. The response signal the sensor module 52 receives from the interface portion 32 (or lack thereof) thus provides an indication of the condition of the element 30.

In another embodiment, the element 30 may be, or comprise, a magnetic portion/element that extends into or through the loadpath of the lock member 22. In this embodiment, the sensor module 52 comprises a magnetic sensor (e.g. a Hall effect sensor) arranged/configured to interrogate, e.g. monitor, the magnetic flux/field at the interface portion 32 of the element 30 when the lock member 22 is in the locked position. In the event that the magnetic element 30 has been damaged or is no longer intact, the magnetic flux/field at the interface portion 32 will have changed in a manner detectable by the sensor module 52. Thus, the module 52 can verify that the loadpath may have been compromised.

A method of operating a tertiary lock system 20, and a method of verifying a condition of a lock member 22 of a tertiary lock system, will now be described with reference to the Figures.

As discussed above, when it is intended for the thrust reverser cowl to be deployed the lock member 22 will be actuated (e.g., translated, as in the illustrated embodiment) out of the path of the component 10. The component 10 will then move in the direction of arrow 12 for deployment of the thrust reverser. Once deployed, the component 10 may move completely past the lock member 22.

When it is intended for the thrust reverser cowl to be stowed, the component 10 will move in the direction of arrow 14. Once the component 10 has been completely retracted past the lock member 22, the lock member 22 will be actuated into the path of the component 10. The lock member 22, by blocking the path of the component 10, therefore prevents unwanted deployment of the thrust reverser assembly 1 (e.g. during take-off or at a cruise altitude).

However, in particular circumstances, the actuating components (not shown) of the tertiary lock system 20 may be compromised (e.g., damaged/broken) and fail, such that they are no longer capable of actuating the lock member 22 into the locked position.

Furthermore, the loadpath of the lock member 22 may also be compromised (e.g., damaged/broken), such that the lock member 22 is no longer capable of preventing the movement of the movable component 10 (e.g. if an actuator 2 and/or a power drive 3 are inadvertently activated) even if the lock member is successfully actuated into the locked position.

Accordingly, in order to confirm that the lock member 22 is in a state/condition to be able to prevent deployment of the thrust reverser, e.g. the loadpath is in place to engage the movable component 10, it is necessary to not only verify that the lock member 22 is in the locked position as commanded, but also to verify that the loadpath of the lock member 22 is intact/uncompromised.

The locking verification system 50 is configured to provide/conduct this (two-step) verification.

First, the locking verification system 50 may check/confirm that the tertiary lock system 20 has been commanded to lock, e.g. check/confirm that the tertiary lock system 20 has been commanded to actuate the lock member 22 into the locked position. This confirmation step may comprise sending a query to a (central) aircraft control system, or to a control system of the thrust reverser assembly, e.g. a control system of a primary or secondary lock system, or a control system of the tertiary lock system 20. Alternatively, the locking verification system 50 may directly query an actuator and/or a sensor of the lock member 22.

Having confirmed that the tertiary lock system 20 has been commanded to actuate the lock member 22 into the locked position, the locking verification system 50 instructs the sensor module 52 to interrogate the element 30.

As mentioned above, the interrogation of the element 30 by the sensor module 52 may comprise determining, e.g. monitoring, a value of a property/characteristic of element 30. The measured property of element 30 can then be analysed by sensor module 52/locking verification system 50 to determine a condition of the element 30 (e.g. intact). The sensor module 52 may be configured to transmit and receive a signal to and from the element 30 in order to interrogate the element 30.

With reference to the embodiment shown in Fig. 2a, in the event that the lock member 22 is in the locked position, then a signal transmitted by the sensor module 52 will be received by the interface portion 32.

A signal received by the interface portion 32 will be conveyed along the element 30, through the loadpath (the section of the element 30 lying in the path of the movable component 10), and returned to the interface portion 32 to be transmitted back to the sensor module 52. Accordingly, in the event that the lock member 22 is in the locked position and the element 30 is operative (i.e. it is intact/uncompromised), the signal transmitted by the sensor module 52 will be returned to the sensor module 52 by the interface portion 32.

Where the element 30 is magnetic or comprises magnetic material, and in the event that the lock member 22 is in the locked position, the magnetic sensor of the sensor module 52 can interrogate a magnetic field of the element 30 at the interface portion 32. Accordingly, in the event that the lock member 22 is in the locked position and the element 30 is operative (i.e. it is intact/uncompromised), the magnetic field measured by the sensor module 52 at the interface portion 32 will correspond to an expected magnetic field of the (intact) element 30.

With reference to Fig. 2b, in the event that the lock member 22 is not in the locked position (e.g. the lock member 22 has not been actuated as intended, for example due to a failure of the actuator of the lock member 22), then the sensor module 52 will not be able to transmit a signal to the interface portion 32. Accordingly, the sensor module 52 will not receive a signal back from the interface portion 32.

Where the element 30 is magnetic or comprises magnetic material, and in the event that the lock member 22 has not been successfully actuated into the locked position, the magnetic sensor of the sensor module 52 will be unable to interrogate the magnetic field of the element 30 (or at least the measure magnetic field will not correspond to an expected magnetic field) as it will not be arranged proximate to the interface portion 32.

With reference to Fig. 2c, in the event that the element 30 is not intact (e.g. because the loadpath is broken or damaged), it will not be operative - in that it will not be able to convey a signal received from the interface portion 32 back to the interface portion 32. Accordingly, the sensor module 52 will not receive a signal back from the interface portion 32.

Where the element 30 is magnetic or comprises magnetic material, and in the event that the element 30 has been damaged as a result of damage to the loadpath of the lock member 22, the magnetic field detected by the magnetic sensor of the sensor module 52 will not correspond to an expected magnetic field.

Thus, according to the above the locking verification system 50 is able to verify that the lock member 22 has been actuated into the locked position and that the element 30 is intact. Based on this and the particular arrangement of the element 30 within the loadpath of the lock member 22 (e.g. at least a section of the element 30 extends into or through the portion of the lock member 22 configured to engage the movable component 10), the locking verification system 50 can confirm that the lock member 22 is in a condition/state capable of preventing deployment of the thrust reverser.

However, if the lock member 22 is damaged in a manner such that the element 30 is also broken/compromised, then the lock member 22 (despite it being in the locked position) may not be capable of performing its function of blocking the movable component 10. Thus, if it cannot be verified that both the element 30 is intact and that the lock member 22 is in the locked position, then it cannot be verified that the lock member 22 is capable of blocking the movable component 10.

The technology of the present invention allows for the verification of a locking condition/state of (a lock member of) a tertiary lock system, where previously this has not been possible to directly monitor. The use of a guide arranged in the lock member (such that, when the lock member is in the locked position, at least a section of the guide lies in the path of the movable component) as described herein provides a means of indicating if the lock member is damaged or broken in such a way that it is not capable of blocking the movable component (even if the lock is in the commanded locked position).

Accordingly, the present invention can protect against (e.g. identify) loss of lock loadpath and degraded capability of the lock loadpath due to partial loss, as well as protect against (e.g. prevent) further degraded capability and eventual full loss of lock loadpath.

Aspects of the invention extend to a thrust reverser assembly, for example the thrust reverser assembly 1 described above, which may be provided on a jet engine (e.g., a turbofan engine), for example to increase the amount of braking of an aircraft upon landing.

The thrust reverser assembly may comprise a movable component and a thrust reverser actuation system ("TRAS") comprising one or more actuators (e.g., actuators 2 shown in Fig. 1). The movable component may form part of a translating cowl of the thrust reverser, if the thrust reverser is, e.g., a "cascade-type" thrust reverser.

The actuators may be configured to selectively move the component between a stowed position and a deployed position. When the component is in its deployed position, the thrust reverser actuation system will change the direction of thrust of the jet engine such that some or all of the thrust is directed forwards, which acts to slow the aircraft so that it can then, e.g., taxi off the runway. When the component is in its stowed position, the thrust reverser actuation system will not change the direction of thrust of the jet engine, which operates normally.

The thrust reverser actuation system may be a cascade-type thrust reverser system, comprising one or more translating cowls and a plurality of cascade vanes. In such a system, the one or more translating cowls are each configured to move between a stowed position, in which the plurality of cascade vanes are not exposed to the jet thrust of the engine, and a deployed position, in which the plurality of cascade vanes are exposed to the jet thrust of the engine such that this is redirected in a generally or partially forward direction.

The thrust reverser actuation system may comprise one or more tertiary lock systems coupled to the movable component to prevent unwanted movement of the component (and, e.g., a translating cowl to which it may be attached) to its deployed position. The movable component may be a component 10 as described above in respect of Fig. 2a, and the one or more tertiary lock systems may each have the features of the lock system 20.

The thrust reverser assembly may further include primary lock systems, for example that are coupled to the actuator, and secondary lock systems that are coupled to a power drive unit of the actuator. It will be appreciated that the tertiary lock system is distinct from the primary and secondary lock system, in that the tertiary lock system is configured to engage the moving component of the thrust reverser (e.g., a translating cowl that moves to expose a plurality of cascade vanes), rather than the actuator that moves the component, or the power drive unit of the actuator.

Although the present invention has been described with reference to particular embodiments, it will be understood by those skilled in the art that various changes in form and detail may be made without departing from the scope of the invention as set forth in the accompanying claims.

## Claims

1. A tertiary lock system (20) for an aircraft thrust reverser, comprising:
a lock member (22) actuatable between a locked position, in which a loadpath of the lock member (22) engages a movable component (10) to prevent deployment of the thrust reverser, and an unlocked position, in which the lock member (22) permits deployment of the movable component (10) of the thrust reverser;
wherein the lock member comprises an element (30) arranged such that at least a portion of the element extends into or through the loadpath of the lock member; and
a locking verification system (50) including a sensor module (52) arranged for interrogating the element when the lock member is in the locked position;
wherein the locking verification system is configured to:
confirm that the tertiary lock system has been commanded to actuate the lock member into the locked position;
instruct the sensor module to interrogate the element; and
verify that the lock member is in the locked position and the loadpath is uncompromised in response to determining that the element is intact.

2. A tertiary lock system as claimed in claim 1, wherein the locking verification system is configured to: raise an alert that the lock member is in the unlocked position and/or the loadpath is compromised in response to determining that the element is not intact.

3. A tertiary lock system as claimed in claim 1 or claim 2, wherein confirming that the tertiary lock system has been commanded to actuate the lock member into the locked position comprises sending a query to an aircraft control system and/or to a control system of the thrust reverser assembly.

4. A tertiary lock system as claimed in any preceding claim, wherein the element (30) is an electrical wire or transmission line, and wherein the sensor module is configured to interrogate the element by transmitting and receiving an electrical signal to and from the element.

5. A tertiary lock system as claimed in any one of claims 1 to 3, wherein the element (30) is an electromagnetic waveguide and wherein the sensor module (52) is configured to interrogate the element by transmitting and receiving an electromagnetic signal to and from the element, preferably wherein the element is an optical fiber and the sensor module comprises an optical sensor.

6. A tertiary lock system as claimed in any one of claims 1 to 3, wherein the element (30) is magnetic or comprises magnetic material, and wherein the sensor module (52) comprises a magnetic sensor configured to interrogate a magnetic field of the element.

7. A tertiary lock system as claimed in any one of claims 1 to 3, wherein the sensor module (52) comprises a piezoelectric transducer configured to interrogate an acoustic response of the element (30).

8. A tertiary lock system as claimed in any preceding claim, wherein the lock member (22) is a blade style lock member; or wherein the lock member is a hook style lock member.

9. A thrust reverser assembly (1) comprising the tertiary lock system (20) as claimed in any preceding claim.

10. A thrust reverser assembly as claimed in claim 9, comprising:
a movable component (10);
one or more actuators (2) configured to selectively move the movable component (10) between a stowed position and a deployed position;
wherein the tertiary lock system (20) is configured to selectively prevent movement of the movable component (10) from its stowed position to its deployed position via selective movement of the lock member (22) between its locked position and its unlocked position.

11. A method of verifying a condition of a lock member (22) of a tertiary lock system (20) for an aircraft thrust reverser, wherein the lock member is actuatable between a locked position, in which a loadpath of the lock member (22) engages a movable component (10) to prevent deployment of the thrust reverser, and an unlocked position, in which the lock member (22) permits deployment of the movable component of the thrust reverser,
wherein the lock member comprises an element (30) arranged such that at least a portion of the element extends into or through the loadpath of the lock member; and
a locking verification system (50) including a sensor module (52) arranged for interrogating the element when the lock member is in the locked position;
the method comprising:
confirming that the tertiary lock system has been commanded to actuate the lock member into the locked position;
instructing the sensor module to interrogate the element; and
verifying that the lock member is in the locked position and the loadpath is uncompromised in response to determining that the element is intact.

12. A method as claimed in claim 11, comprising:
raising an alert that the lock member is in the unlocked position and/or the loadpath is compromised in response to response to determining that the element is not intact.

13. A method as claimed in claim 11 or 12, wherein confirming that the tertiary lock system has been commanded to actuate the lock member into the locked position comprises sending a query to an aircraft control system and/or to a control system of the thrust reverser assembly.

14. A method as claimed in any one of claims 11 to 13, wherein the element (30) is an electrical wire or transmission line, and wherein the sensor module is configured to interrogate the element by transmitting and receiving an electrical signal to and from the element; or
wherein the element (30) is an electromagnetic waveguide and wherein the sensor module (52) is configured to interrogate the element by transmitting and receiving an electromagnetic signal to and from the element, preferably wherein the element is an optical fiber and the sensor module comprises an optical sensor.

15. A method as claimed in any one of claims 11 to 13, wherein the element (30) is magnetic or comprises magnetic material, and wherein the sensor module (52) comprises a magnetic sensor configured to interrogate a magnetic field of the element; or
wherein the sensor module (52) comprises a piezoelectric transducer configured to interrogate an acoustic response of the element (30).
